# EUROPÄISCHE PATENTSCHRIFT

(11) **EP 2 457 753 B1**
(45) Veröffentlichungstag und Bekanntmachung des Hinweises auf die Patenterteilung: **15.05.2019**
(21) Anmeldenummer: 11176069.0
(22) Anmeldetag: 01.08.2011
(51) Int. Cl.: B60G 7/00, B62D 7/14, B62D 7/15, B62D 15/02

(54) **Stellvorrichtung**
Actuator
Dispositif de réglage

(30) Priorität: 30.11.2010 DE 102010052917
(43) Veröffentlichungstag der Anmeldung: 30.05.2012
(73) Patentinhaber: Schaeffler Technologies AG & Co. KG, 91074 Herzogenaurach (DE)
(72) Erfinder: Osterlänger, Jürgen, 91448 Emskirchen (DE); Wittmann, Bernd, 96178 Pommersfelden (DE); Mehlis, Thomas, 91077 Kleinsendelbach (DE); Lauger, Mark, 91362 Pretzfeld (DE)

(56) Entgegenhaltungen:
- EP-A1- 0 667 279
- DE-A1-102007 007 234
- DE-A1-102009 039 164
- JP-A- 2007 001 364
- JP-A- 2009 133 339
- US-A- 5 083 626
- US-A- 5 135 067

## Beschreibung

Die Erfindung betrifft eine Stellvorrichtung für ein Fahrwerk eines Kraftfahrzeugs.

Aus der DE 10 2007 007 234 A1 ist eine elektromechanische Stellvorrichtung für Radaufhängungen von Kraftfahrzeugen bekannt, die in einen Lenker der Radaufhängung angeordnet ist und mittels eines Elektromotors abhängig von Steuerungsparametern dessen Lage verändert, so dass die Spur oder der Sturz eines an den Lenker montierten Rads verstellt werden kann. Hierzu treibt der Elektromotor ein Spindelgetriebe an, dessen Getriebespindel daraufhin axial gegenüber dem Gehäuse des Stellantriebs axial verlagert wird, wodurch ein lineares Stellen des Rades ermöglicht wird.

Um die absolute Stellposition der Stellvorrichtung erfassen zu können, ist eine die Relativverschiebung der Getriebespindel erfassende Wegmesseinrichtung in das Gehäuse integriert. Die Wegmesseinrichtung, beispielsweise in Form eines Linearpotentiometers, enthält ein stabförmiges Geberteil, das parallel zur Getriebespindel angeordnet und mit dieser in der Weise wirkverbunden ist, dass das Geberteil an dem gehäusefest angeordneten Erfassungsteil ein vom Axialweg der Getriebespindel abhängiges Sensorsignal erzeugt.

Die zu der Getriebespindel parallele Anordnung der Wegmesseinrichtung erfordert einen großen Bauraum des Gehäuses der Stellvorrichtung und ist aufgrund der zweiachsigen Anordnung von Geberteil und Getriebespindel und der dadurch notwendigen Ankoppelung des Geberteils an die Getriebespindel kinematisch aufwendig.

Aufgabe der Erfindung ist daher, eine Stellvorrichtung insbesondere im Fahrwerk eines Fahrzeugs vorzuschlagen, deren Wegmesseinrichtung kinematisch einfach an die Getriebespindel koppelbar ist und die kleinere äußere Abmessungen aufweist.

Aus US-A-5083626 ist eine Stellvorrichtung nach den Merkmalen des Oberbegriffs des Anspruchs 1 bekannt geworden.

Die Aufgabe wird durch eine Stellvorrichtung insbesondere in einem Fahrwerk eines Kraftfahrzeugs mit einem Gehäuse, einem in dem Gehäuse untergebrachten Spindelgetriebe und einer axial gegenüber dem Gehäuse verlagerbaren, verdrehgesicherten Getriebespindel, einem koaxial um die Getriebespindel angeordneten und diese durch Drehantrieb des Spindelgetriebes axial gegenüber dem Gehäuse verlagernden Elektromotor sowie einer einen Axialweg der Getriebespindel erfassenden Wegmesseinrichtung mit einem Erfassungsteil und zumindest einem Geberteil gelöst, wobei das Erfassungsteil gegenüber dem Gehäuse fest und das zumindest eine Geberteil in die Getriebespindel integriert ist.

Die Wegmesseinrichtung ist hierbei koaxial zu der bevorzugt einteilig ausgebildeten Getriebespindel angeordnet. Im Gegensatz zu einer parallelen Anordnung der Wegmesseinrichtung, bei der das zumindest eine Geberteil auf einer Längsachse parallel zur Längsachse der Getriebespindel bewegt wird, kann Bauraum allein schon dadurch eingespart werden, dass die gesamte Messeinrichtung so angeordnet werden kann, dass sie radial innerhalb eines von dem Spindelgetriebe und dem koaxial um die Getriebespindel angeordneten Elektromotors zwangsweise vorgegebenen Bauraums und damit bauraumneutral untergebracht werden kann. Weiterhin kann durch die Integration des zumindest einen Geberteils direkt in die Getriebespindel auf eine kinematische Anbindung des parallel zur Getriebespindel angeordneten Geberteils an die Getriebespindel verzichtet und dadurch Baukosten gespart werden.

Im Sinne der Erfindung ist unter dem Spindelgetriebe insbesondere ein Getriebe zu verstehen, das von einem bevorzugt koaxial zu der Getriebespindel angeordneten Elektromotor drehangetrieben wird, so dass unter Wandlung einer Drehbewegung in eine Linearbewegung die Getriebespindel längs ihrer Längsachse verlagert wird. Hierzu kann die Getriebespindel mittels einer entsprechenden Verdrehsicherung gegenüber dem Gehäuse an einer Verdrehung gehindert werden. Die Übersetzung des Spindelgetriebes wird an die Eigenschaften des Elektromotors und den erforderlichen Axialweg der Getriebespindel längs der Längsachse angepasst. Es hat sich beispielsweise zur Einstellung einer entsprechenden Übersetzung als vorteilhaft herausgestellt, wenn das Spindelgetriebe als Planetengetriebe ausgebildet ist. Weiterhin können vorteilhafterweise Kugelspindelgetriebe verwendet werden.

Der Elektromotor kann ein mechanisch oder elektronisch kommutierter, beispielsweise pulsweitenmodulierter Gleichstrommotor sein, dessen Drehkennwerte wie beispielsweise Drehwinkel, Drehzahl und Drehbeschleunigung mittels eines Inkrementwinkelsensors erfasst wird. Der Rotor des Elektromotors treibt dabei ein Eingangsteil des Spindelgetriebes wie Hülse an, während der Stator drehfest in dem Gehäuse des Stellantriebs aufgenommen ist.

Die Messeinrichtung zur Erfassung des Axialwegs der Getriebespindel ist bevorzugt als absolute Wegmesseinrichtung vorgesehen. Dies bedeutet, dass nach gegebenenfalls notwendiger Kalibration jeder Position der Getriebespindel entlang des Axialwegs jeweils ein eindeutiger Messwert der Wegmesseinrichtung zugeordnet werden kann. Hierzu erzeugt das zumindest eine in die Getriebespindel integrierte Geberteil in dem Erfassungsteil abhängig vom Axialweg ein stetiges Signal, das in einer Auswerteeinheit bei einer vorgegebenen Auflösung einer Position der Getriebespindel zugeordnet wird. Die Zuordnung des Signals zu einer absoluten Position der Getriebespindel kann anhand von Tabellen, Kennlinien, arithmetischen Formeln und dergleichen erfolgen. Weitere Einflussparameter, beispielsweise die Betriebstemperatur, werden vorteilhafterweise und soweit zur Messgenauigkeit erforderlich berücksichtigt.

Als absolute Messgrößen können physikalisch bekannte, sich mit dem Abstand des zumindest einen Geberteils vom Erfassungsteil ändernde Größen verwendet werden. Beispielsweise können potentiometrische, induktive, magnetische, optische und ähnliche Messeinrichtungen verwendet werden. Durch die Verwendung mehrerer Geberteile können aneinander grenzende oder überlappende Messbereiche vorgesehen werden, so dass größere Axialwege erfasst werden können und/oder die Auflösung und/oder Zuverlässigkeit gesteigert werden können.

Das zumindest eine Geberteil ist direkt auf der Getriebespindel gefügt, beispielsweise mit dieser formschlüssig, reibschlüssig und/oder stoffschlüssig verbunden. Dabei hat es sich als besonders vorteilhaft erwiesen, wenn das zumindest eine Geberteil mit der Getriebespindel verschraubt und zusätzlich mit der Getriebespindel verankert ist.

Weitere vorteilhafte Bauraumverhältnisse schafft dabei eine Einsenkung des zumindest einen Geberteils in die Getriebespindel. Hierzu weist die Getriebespindel eine oder mehrere Einsenkungen, die beispielsweise komplementär zur Form des oder der Geberteile ausgefräst sind, auf. Das zumindest eine Geberteil ist in der Einsenkung aufgenommen und kann dabei im Wesentlichen bündig zur Oberfläche der Getriebespindel in dieser aufgenommen werden.

Die Wegmesseinrichtung ist auf axialer Höhe einer Verdrehsicherung der Getriebespindel gegenüber dem Gehäuse angeordnet. Bei einer derartigen Anordnung wird eine Doppelnutzung des axialen Bauraums erzielt, so dass das Gehäuse der Stellvorrichtung entsprechend axial schmalbauend ausgebildet werden kann und beispielsweise das Verhältnis zwischen axialer Ausdehnung und dem erreichbaren Axialweg der Getriebespindel vergrößert werden kann.

Beispielsweise kann die Verdrehsicherung zumindest zwei über den Umfang angeordnete Lastführungsbereiche gegenüber dem Gehäuse aufweisen und das Erfassungsteil in Umfangsrichtung betrachtet zwischen den Lastführungsbereichen angeordnet sein. Die Lastführungsbereiche greifen dabei radial in entsprechend aus der Spindel ausgenommene Längsschlitze oder Längsnuten ein. In Umfangsrichtung zwischen diesen Längsschlitzen kann das zumindest eine Geberteil vorzugsweise in einer entsprechenden Einsenkung aufgenommen sein. Die entsprechende Einsenkung kann in demselben Bearbeitungsgang wie die Längsschlitze dargestellt werden, so dass zusätzliche Werkzeuge und Bearbeitungseinrichtungen entfallen.

Insbesondere aus Sicherheitsgründen hat es sich als vorteilhaft erwiesen, wenn der den Axialweg absolut messenden Wegmesseinrichtung eine redundante Erfassung des Axialwegs beigeordnet ist. Insbesondere aus Kostengründen kann diese ein relativ messender Sensor, beispielsweise ein Inkrementalweg- oder Inkrementwinkelsensor sein, aus dessen erfassten Inkrementen der Axialweg abgeleitet werden kann. Beispielsweise kann der Inkrementwinkelsensor des Elektromotors zur Erfassung dessen Drehkennwerte sein, wobei unter Berücksichtigung der Übersetzung des Spindelgetriebes der Axialweg der Getriebespindel abgeleitet werden kann. Alternativ oder zusätzlich kann ein Rotativsensor vorgesehen sein, der die Drehbewegung eines drehenden Bauteils des Spindelgetriebes erfasst und auf einem Bauraum untergebracht ist, der radial innerhalb des Elektromotors angeordnet ist, so dass bei Verwendung eines derartigen zusätzlichen Sensors ebenfalls keine Bauraumerhöhung vorgesehen werden muss.

Die Stellvorrichtung ist in Kraftfahrzeugen vorgesehen und eignet sich grundsätzlich für alle Anwendungen, bei denen ein oder mehrere Bauteile oder Funktionselemente in einer linearen Bewegungsrichtung entlang der Längsachse der Getriebespindel gegenüber einem fest angeordneten Bauteil, an dem das Gehäuse der Stellvorrichtung befestigt ist, um einen Axialweg verlagert werden sollen. Beispielsweise kann eine Stellvorrichtung vorgesehen sein, bei der das Gehäuse an einem festen Fahrwerkteil aufgenommen und mittels der Getriebespindel ein zu stellendes Bauteil gegenüber diesem linear stellbar angeordnet ist. Es versteht sich, dass in Ausführungsbeispielen mit entsprechenden Anforderungen das Gehäuse auch an dem Lenkhebel und die Getriebespindel an einem Fahrwerksbauteil aufgenommen sein können.

Alternativ kann das Gehäuse fest an einem Fahrwerkteil so angeordnet sein, dass die Getriebespindel beidseitig an deren Ende ein zu stellendes Bauteil beaufschlagen kann.

In bevorzugter Weise eignet sich die Stellvorrichtung als Fahrwerksaktuator insbesondere für eine Spurverstellung und/oder Sturzverstellung eines Rads und/oder Einstellung eines Fahrwerkniveaus. So kann beispielsweise durch eine Stellvorrichtung der Sturz oder die Spur eines einzigen Rads verstellt werden, indem das Gehäuse der Stellvorrichtung an einem Fahrwerksbauteil aufgenommen ist und die Getriebespindel einen Lenk- oder Sturzhebel einer Aufnahme für ein Rad beaufschlagt. Alternativ kann das Gehäuse einer Stellvorrichtung beispielsweise für eine Hinterradlenkung fest an einem Fahrwerkteil aufgenommen sein und die das Gehäuse entlang ihrer Längsachse durchgreifende Getriebespindel an deren Enden beidseitig jeweils einen Lenkhebel für die zu lenkenden Hinterräder gegenüber dem Fahrwerkteil beaufschlagen, so dass die Räder jeweils um den gleichen Winkel angelenkt werden. Ein weiteres vorteilhaftes Ausführungsbeispiel kann eine Stellvorrichtung vorsehen, die Fahrwerkskomponenten horizontal beaufschlagt, um eine Niveauregelung zu bewirken. Hierzu können mehrere Stellantriebe an verschiedenen Stellen des Fahrwerkes angeordnet sein und mittels einer Steuereinrichtung gemeinsam geregelt werden.

Die vorgeschlagene Stellvorrichtung kann soweit nötig über ein selbsthaltendes beziehungsweise selbsthemmendes Spindelgetriebe verfügen, so dass der Elektromotor in einer vorgegebenen Stellung gegebenenfalls abgeschaltet werden kann.

Die Erfindung wird anhand der in den Figuren 1 bis 5 dargestellten Ausführungsbeispiele näher erläutert. Dabei zeigen:
- Figur 1: einen Schnitt durch eine Stellvorrichtung,
- Figur 2: eine Explosionsdarstellung der Getriebespindel mit Wegmesseinrichtung und Verdrehsicherung der Stellvorrichtung der Figur 1,
- Figur 3: eine Ansicht des Spindelgewindes der Stellvorrichtung der Figur 1,
- Figur 4: die Stellvorrichtung der Figur 1 in Ansicht ohne das vordere Gehäusebauteil
- und Figur 5: eine zu den Figuren 1 bis 4 alternative Ausführungsform einer Stellvorrichtung mit beidseitigen Beaufschlagungsbereichen an der Getriebespindel.

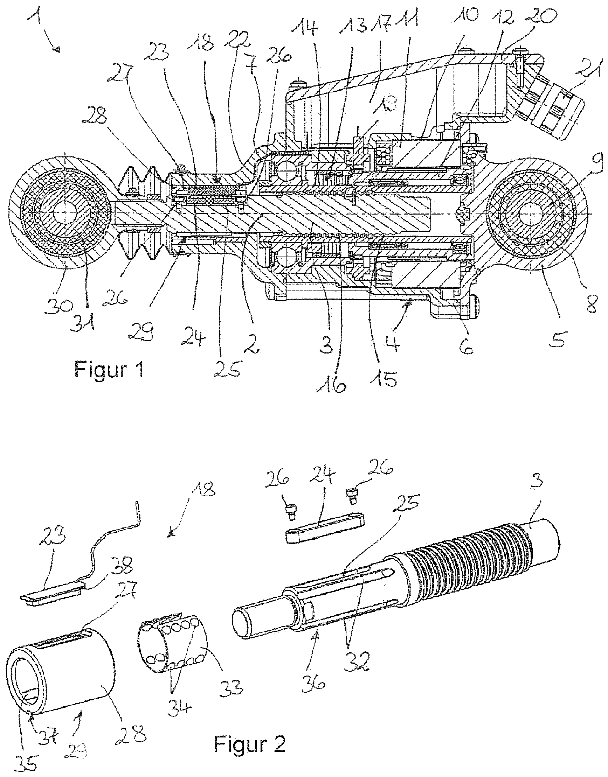

Figur 1 zeigt die Stellvorrichtung 1 im Längsschnitt entlang der Längsachse 2 der axial gegenüber dem Gehäuse 4 verlagerbaren Getriebespindel 3. Das Gehäuse ist mehrteilig aus den Gehäusebauteilen 5, 6, 7 gebildet. Das Gehäusebauteil 5 bildet die Öse 8 mit der Lagerbuchse 9 zur Befestigung der Stellvorrichtung an einem Fahrwerksbauteil zur Einzelanlenkung eines Rads, beispielsweise eines Hinterrads für eine Hinterradlenkung.

In dem Gehäusebauteil 6 ist der Elektromotor 10 mit dem Stator 11 und dem Rotor 12 untergebracht und mittels des Stators 11 mit diesem drehfest verbunden. Das Spindelgetriebe 13 enthält die Hülse 14 und die Getriebespindel 3 und ist als Kugelumlaufgetriebe mit zwischen der Hülse 14 und Gewindegängen 15 der Getriebespindel 3 abwälzenden Kugeln 16 ausgebildet. Die Hülse 14 wird von dem Rotor 12 drehangetrieben und ist gegenüber dem Gehäuse verdrehbar gelagert. Das Gehäusebauteil 6 enthält weiterhin die vom Bauraum des Spindelgetriebes 13 gekapselt ausgebildete Kammer 17, die die Verkabelung des Elektromotors 10, der Wegmesseinrichtung 18 und des Rotativsensors 19 aufnimmt und gegebenenfalls eine Vorortelektronik zur Steuerung des Elektromotors 10, der Auswertung der Sensorsignale der Wegmesseinrichtung 18 und des Rotativsensors 19 sowie eine Kommunikationseinrichtung mit einem Steuergerät enthält. Die Kammer 17 ist mittels des Deckels 20 verschlossen und enthält die Kabeldurchführung 21.

Das sich in axiale Richtung von dem Gehäusebauteil 6 weg radial verjüngende Gehäusebauteil 7 nimmt auf geringerem Durchmesser als dem Außendurchmesser des Elektromotors 10 die Wegmesseinrichtung 18 auf, so dass der Bauraum der Stellvorrichtung 1 nicht durch die Wegmesseinrichtung sondern durch den Elektromotor 10 vorgegeben ist. Die Wegmesseinrichtung 18 ist koaxial zu der Längsachse 2 angeordnet, wobei das Erfassungsteil 23 mit der in die Kammer 17 geführten Verbindungsleitung 22 fest mit dem Gehäusebauteil 7 und damit dem Gehäuse 4 verbunden ist und das Geberteil 24 in die Getriebespindel 3 integriert ist. Das Geberteil 24 ist dabei in der Einsenkung 25 der Getriebespindel 3 im Wesentlichen bündig eingebracht und mittels der Schrauben 26 an der Getriebespindel 3 befestigt. Das Erfassungsteil 23 ist in der Ausnehmung 27 der Hülse 28 aufgenommen, die drehfest mit dem Gehäusebauteil 7 verbunden ist und mittels der hier nicht einsehbaren Linearführung der Getriebespindel 3 die Verdrehsicherung 29 und die endseitige Lagerung für die Getriebespindel 3 bildet. Die Getriebespindel 3 trägt an ihrem stirnseitigen, aus dem Gehäuse 4 ragenden Ende die Öse 30 mit der Lagerbuchse 31 zur Verbindung mit einem Lenkhebel eines Rads wie Hinterrad.

Die zwischen einem festen Fahrwerksbauteil mittels der Öse 8 aufgenommene und mittels der Öse 30 mit dem Lenkhebel eines Rads angeordnete Stellvorrichtung 1 wird durch den Elektromotor 10 angetrieben. Dieser wird durch ein Steuergerät geregelt angetrieben. Durch Antrieb der Hülse 14 mittels des Rotors 12 wird die Getriebespindel 3 axial verlagert und betätigt den Lenkhebel. Dabei erfasst der Rotativsensor 19 durch Zählung von Winkelinkrementen und Auswertung der Übersetzung des Spindelgetriebes 13 den von der Getriebespindel 3 zurückgelegten Axialweg relativ. Eine absolute Bestimmung des Axialwegs erfolgt mittels der Wegmesseinrichtung 18, die beispielsweise die sich über den Axialweg ändernde Induktion, Magnetisierung oder Widerstand an dem Erfassungsteil auswertet, wobei diese durch das Geberteil 24 in Abhängigkeit von dessen absoluter Position gegenüber dem Erfassungsteil 23 geändert werden.

Figur 2 zeigt die Getriebespindel 3, die Verdrehsicherung 29 und die Wegmesseinrichtung 18 in Explosionsdarstellung. Die Getriebespindel 3 enthält über den Umfang verteilte Längsnuten 32, in die die in dem Lagerkäfig 33 aufgenommenen Kugeln 34 eingelegt werden. Gleichzeitig sind die Kugeln 34 in Längsnuten 35 der Hülse 28 eingelegt, so dass die Kugeln 34 in Verbindung mit den Längsnuten 32, 35 über den Umfang verteilte Lastführungsbereiche 36 bilden, die eine Axialverlagerung der Getriebespindel 3 erlauben, jedoch eine Verdrehung dieser gegenüber der Hülse 28 verhindern und damit die Verdrehsicherung 29 bilden. Die Hülse 28 ist an dem Gehäusebauteil 7 (Figur 1) mittels der Splintverbindung 37 verdrehgesichert aufgenommen. In Umfangsrichtung betrachtet zwischen den Längsnuten 32 und damit zwischen den Lastführungsbereichen 36 ist die Einsenkung 25 in die Getriebespindel 3 eingebracht, in die das Geberteil 24 der Wegmesseinrichtung eingebracht und mittels der Schrauben 26 verschraubt ist. Auf demselben Umfang und damit dem Geberteil 24 radial unmittelbar gegenüberliegend ist an der Hülse 28 die Ausnehmung 27 angeordnet, in die das Erfassungsteil 23 eingebracht, beispielsweise eingehängt oder eingeklipst ist. Der dem Geberteil 24 abgewandte, erweiterte Kragen 38 des Erfassungsteils 23 sorgt dabei für eine exakte radiale und in Umfangsrichtung orientierte Positionierung gegenüber der Hülse 28 und damit über die Kugeln 34 zum Geberteil, so dass nach gegebenenfalls erforderlicher Kalibrierung ausschließlich eine Änderung der axialen Position des Geberteils 24 gegenüber dem Erfassungsteil und damit die axiale Verlagerung der Getriebespindel 3 die absolute Zuordnung des Sensorsignals der Wegmesseinrichtung 18 zum Axialweg der Getriebespindel 3 gewährleistet ist.

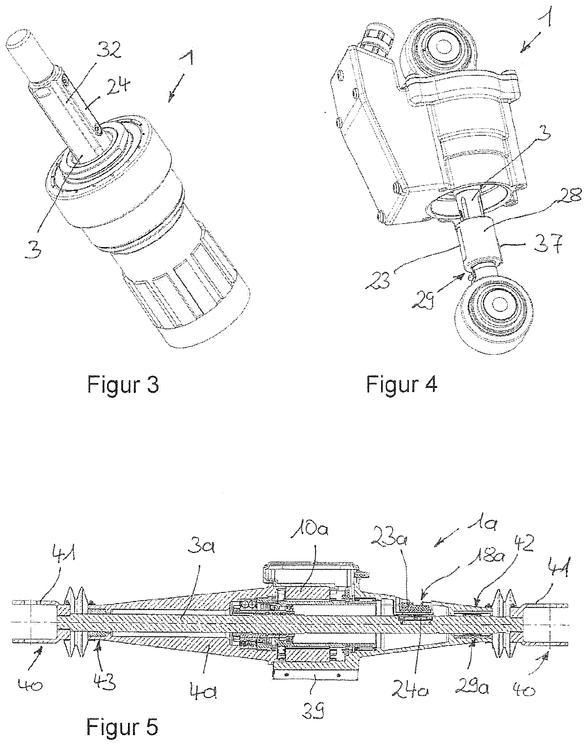

Die Figur 3 zeigt eine Unterbaugruppe der Stellvorrichtung 1 der Figur 1 in Ansicht bei abgenommenem Gehäusebauteil 7 und entfernter Hülse 28 mit Blick auf die Längnuten 32 der Getriebespindel 3 und Umfangsrichtung betrachtet zwischen zwei Längsnuten im Wesentlichen bündig eingebrachtem Geberteil 24.

Figur 4 zeigt die nahezu komplett montierte Stellvorrichtung 1 der Figur 1 mit der Übersicht halber abgenommenem Gehäusebauteil 7, mit dem die Hülse 28 zur Bildung der Verdrehsicherung 29 gegenüber dem Gehäusebauteil 7 mittels der diametral dem Erfassungsteil 23 gegenüberliegenden Splintverbindung 37 drehfest verbunden ist. Wie aus der Figur 1 hervorgeht, ist die Hülse 28 axial im Gehäusebauteil 7 durch entsprechende Anschläge gesichert. Desweiteren ist die Hülse 28 sowie das bündig mit dem Außenumfang dieser abschließende Erfassungsteil 23 radial positioniert in dem Gehäusebauteil aufgenommen. Die Getriebespindel 3 ist mittels der Linearführung in der Hülse 28 axial in dieser verlagerbar, verdrehgesichert und radial gelagert.

Die Figur 5 zeigt eine alternative Ausführungsform eines Fahrwerkaktuators in Form der Stellvorrichtung 1a im Schnitt. Hierbei ist das Gehäuse 4a mittels der Befestigungslasche 39 an einem Fahrwerksbauteil, beispielsweise an der Hinterachse fest aufgenommen. Die Getriebespindel 3a durchgreift das Gehäuse 4a beidseitig und trägt beidseitig Beaufschlagungsbereiche 40 - hier Gabeln 41 - zur Beaufschlagung von Lenkhebeln jeweils eines Rads wie Hinterrad. Die Getriebespindel 3a enthält entsprechend der Stellvorrichtung 1 der Figur 1 die Wegmesseinrichtung 18a mit in die Getriebespindel 3a eingesenktem Geberteil 24a und mit dem Gehäuse 4a verbundenen Erfassungsteil 23a. Der radiale Aufbau der Wegmesseinrichtung 18a lässt sich durch den radial platzsparenden Einbau so gering gestalten, dass die Wegmesseinrichtung 18a radial innerhalb der radialen Ausdehnung des Gehäuses 4a im Bereich des Elektromotors 10a vorgesehen werden kann. Aufgrund des nicht problematischen axialen Bauraums der Stellvorrichtung 1a kann die Wegmesseinrichtung 18a axial beabstandet von der Verdrehsicherung 29a beziehungsweise von den Linearführungen 42, 43 ausgebildet werden.

### Bezugszeichenliste

- 1: Stellvorrichtung
- 1a: Stellvorrichtung
- 2: Längsachse
- 3: Getriebespindel
- 3a: Getriebespindel
- 4: Gehäuse
- 4a: Gehäuse
- 5: Gehäusebauteil
- 6: Gehäusebauteil
- 7: Gehäusebauteil
- 8: Öse
- 9: Lagerbuchse
- 10: Elektromotor
- 10a: Elektromotor
- 11: Stator
- 12: Rotor
- 13: Spindelgetriebe
- 14: Hülse
- 15: Gewindegang
- 16: Kugel
- 17: Kammer
- 18: Wegmesseinrichtung
- 18a: Wegmesseinrichtung
- 19: Rotativsensor
- 20: Deckel
- 21: Kabeldurchführung
- 22: Verbindungsleitung
- 23: Erfassungsteil
- 23a: Erfassungsteil
- 24: Geberteil
- 24a: Geberteil
- 25: Einsenkung
- 26: Schraube
- 27: Ausnehmung
- 28: Hülse
- 29: Verdrehsicherung
- 29a: Verdrehsicherung
- 30: Öse
- 31: Lagerbuchse
- 32: Längsnut
- 33: Lagerkäfig
- 34: Kugel
- 35: Längsnut
- 36: Lastführungsbereich
- 37: Splintverbindung
- 38: Kragen
- 39: Befestigungslasche
- 40: Beaufschlagungsbereich
- 41: Gabel
- 42: Linearführung
- 43: Linearführung

## Patentansprüche

1. Stellvorrichtung (1, 1a) für ein Fahrwerk eines Kraftfahrzeugs, mit einem Gehäuse (4, 4a), und mit einem in dem Gehäuse (4, 4a) untergebrachten Spindelgetriebe (13), und mit einer axial gegenüber dem Gehäuse (4, 4a) verlagerbaren, verdrehgesicherten Getriebespindel (3, 3a), und mit einem koaxial um die Getriebespindel (3, 3a) angeordneten Elektromotor (10, 10a), der die Getriebespindel (3, 3a) durch Drehantrieb des Spindelgetriebes (13) axial gegenüber dem Gehäuse (4, 4a) verlagert , und mit einer einen Axialweg der Getriebespindel (3, 3a) erfassenden Wegmesseinrichtung (18, 18a), die ein gegenüber dem Gehäuse (4, 4a) fest angeordnetes Erfassungsteil (23, 23a) sowie zumindest ein Geberteil (24, 24a) aufweist, und mit einer Verdrehsicherung (29) der Getriebespindel (3) gegenüber dem Gehäuse (4) **dadurch gekennzeichnet, dass** die Wegmesseinrichtung (18) auf axialer Höhe der Verdrehsicherung (29) angeordnet ist, und dass das Geberteil (24, 24a) der Wegmesseinrichtung (18) in einer Einsenkung (25) der Getriebespindel (3, 3a) aufgenommen ist.

2. Stellvorrichtung (1, 1a) nach Anspruch 1, **dadurch gekennzeichnet, dass** das zumindest eine Geberteil (24, 24a) mit der Getriebespindel (3, 3a) formschlüssig verbunden und/oder verschraubt ist.

3. Stellvorrichtung (1) nach Anspruch 1, **dadurch gekennzeichnet, dass** die Verdrehsicherung (29) zumindest zwei über den Umfang angeordnete Lastführungsbereiche (36) gegenüber dem Gehäuse (4) aufweist und das Erfassungsteil (23) in Umfangsrichtung betrachtet zwischen den Lastführungsbereichen (36) angeordnet ist.

4. Stellvorrichtung (1, 1a) nach einem der Ansprüche 1 bis 3, **dadurch gekennzeichnet, dass** die Wegmesseinrichtung (18, 18a) eine den Axialweg absolut erfassende Wegmesseinrichtung ist.

5. Stellvorrichtung (1, 1a) nach Anspruch 4, **dadurch gekennzeichnet, dass** der Wegmesseinrichtung (18, 18a) ein den Axialweg redundant und aus einer Drehzahl des Spindelgetriebes (13) relativ erfassender Rotativsensor (19) beigeordnet ist.

6. Stellvorrichtung (1, 1a) nach einem der Ansprüche 1 bis 5, **dadurch gekennzeichnet, dass** dieser als Fahrwerksaktuator insbesondere für eine Spurverstellung und/oder Sturzverstellung eines Rads und/oder Einstellung eines Fahrwerkniveaus ausgebildet ist.

7. Stellvorrichtung (1) nach Anspruch 6, **dadurch gekennzeichnet, dass** das Gehäuse (4) an einem festen Fahrwerkteil aufgenommen und mittels der Getriebespindel (3) ein zu stellendes Bauteil gegenüber diesem linear stellbar ist.

8. Stellvorrichtung (1a) nach Anspruch 7, **dadurch gekennzeichnet, dass** das Gehäuse (4a) fest an einem Fahrwerkteil aufgenommen ist und die das Gehäuse (4a) entlang ihrer Längsachse durchgreifende Getriebespindel (3a) an deren Enden beidseitig jeweils ein zu stellendes Bauteil gegenüber dem Fahrwerkteil stellbar beaufschlagt.

## Claims

1. Adjusting apparatus (1, 1a) for a chassis of a motor vehicle, having a housing (4, 4a), and having a spindle mechanism (13) which is accommodated in the housing (4, 4a), and having a rotationally locked gear spindle (3, 3a) which can be moved axially with respect to the housing (4, 4a), and having an electric motor (10, 10a) which is arranged coaxially around the gear spindle (3, 3a) and moves the gear spindle (3, 3a) axially with respect to the housing (4, 4a) by way of rotational driving of the spindle mechanism (13), and having a distance measuring device (18, 18a) which detects an axial travel of the gear spindle (3, 3a) and has a detection part (23, 23a) which is arranged fixedly with respect to the housing (4, 4a) and at least one encoder part (24, 24a), and having an anti-rotation safeguard (29) of the gear spindle (3) with respect to the housing (4), **characterized in that** the distance measuring device (18) is arranged at the axial level of the anti-rotation safeguard (29), and **in that** the encoder part (24, 24a) of the distance measuring device (18) is received in a hollow (25) of the gear spindle (3, 3a).

2. Adjusting apparatus (1, 1a) according to Claim 1, **characterized in that** the at least one encoder part (24, 24a) is screwed and/or connected in a positively locking manner to the gear spindle (3, 3a).

3. Adjusting apparatus (1) according to Claim 1, **characterized in that** the anti-rotation safeguard (29) has at least two load-carrying regions (36) opposite the housing (4) which are arranged over the circumference, and the detection part (23) is arranged between the load-carrying regions (36) as viewed in the circumferential direction.

4. Adjusting apparatus (1, 1a) according to one of Claims 1 to 3, **characterized in that** the distance measuring device (18, 18a) is a distance measuring device which detects the axial travel absolutely.

5. Adjusting apparatus (1, 1a) according to Claim 4, **characterized in that** the distance measuring device (18, 18a) is assigned a rotative sensor (19) which detects the axial travel redundantly and in a relative manner from a rotational speed of the spindle mechanism (13).

6. Adjusting apparatus (1, 1a) according to one of Claims 1 to 5, **characterized in that** it is configured as a chassis actuator, in particular for a track adjustment and/or camber adjustment of a wheel and/or setting of a chassis ride height.

7. Adjusting apparatus (1) according to Claim 6, **characterized in that** the housing (4) is received on a fixed chassis part, and a component to be adjusted can be adjusted in a linear manner with respect to the said housing (4) by means of the gear spindle (3).

8. Adjusting apparatus (1a) according to Claim 7, **characterized in that** the housing (4a) is received fixedly on a chassis part, and the gear spindle (3a) which engages through the housing (4a) along its longitudinal axis loads, at its ends on both sides, in each case one component to be adjusted, in a manner which can be adjusted with respect to the chassis part.

## Revendications

1. Dispositif de réglage (1, 1a) d'un châssis d'un véhicule automobile, pourvu d'un boîtier (4, 4a), et d'une transmission à broche (13) logée dans le boîtier (4, 4a) et pourvu d'une broche de transmission (3, 3a), déplaçable en direction axiale par rapport au boîtier (4, 4a), bloquée en rotation et pourvu d'un moteur électrique (10, 10a) placé de manière coaxiale autour de la broche de transmission (3, 3a) qui déplace la broche de transmission (3, 3a) par entraînement en rotation de la transmission à broche (13) en direction axiale par rapport au boîtier (4, 4a) et pourvu d'un système de mesure de course (18, 18a) qui détecte une course axiale de la broche de transmission (3, 3a) qui comporte une pièce de détection (23, 23a) placée de manière fixe par rapport au boîtier (4, 4a), ainsi qu'au moins une pièce transductrice (24, 24a) et pourvu d'un blocage en rotation (29) de la broche de transmission (3) par rapport au boîtier (4), **caractérisé en ce que** le système de mesure de course (18) est placé à hauteur axiale du blocage en rotation (29) et **en ce que** la pièce transductrice (24, 24a) du système de mesure de course (18) est logée dans un renfoncement (25) de la broche de transmission (3, 3a).

2. Dispositif de réglage (1, la) selon la revendication 1, **caractérisé en ce que** l'au moins une pièce transductrice (24, 24a) est assemblée par complémentarité de forme et/ou vissé avec la broche de transmission (3, 3a) .

3. Dispositif de réglage (1) selon la revendication 1, **caractérisé en ce que** le blocage en rotation (29) comporte au moins deux zones de guidage de charge (36) placées sur la périphérie, en regard du boîtier (4) et **en ce que**, considérée dans la direction périphérique, la pièce de détection (23) est placée entre les zones de guidage de charge (36).

4. Dispositif de réglage (1, la) selon l'une quelconque des revendications 1 à 3, **caractérisé en ce que** le système de mesure de course (18, 18a) est un système de mesure de course détectant de manière absolue la course axiale.

5. Dispositif de réglage (1, la) selon la revendication 4, **caractérisé en ce qu'**au système de mesure de course (18, 18a) est associé un capteur rotatif (19) détectant la course axiale de manière redondante et de manière relative à partir du régime de la transmission à broche (13) .

6. Dispositif de réglage (1, la) selon l'une quelconque des revendications 1 à 5, **caractérisé en ce qu'**il est conçu sous la forme d'un actionneur de châssis, notamment pour un réglage de la voie et ou un réglage de carrossage d'une roue et/ou un réglage d'un niveau du châssis.

7. Dispositif de réglage (1) selon la revendication 6, **caractérisé en ce que** le boîtier (4) est logé sur une pièce de châssis fixe et est susceptible de régler à l'aide de la broche de transmission (3) un composant à régler de manière linéaire par rapport à celle-ci.

8. Dispositif de réglage (la) selon la revendication 7, **caractérisé en ce que** le boîtier (4a) est logé de manière fixe sur une pièce de châssis et **en ce que** la broche de transmission (3a) traversant le boîtier (4a) le long de son axe longitudinal soumet sur les extrémités de celle-ci de manière réglable chaque fois un composant à régler par rapport à la pièce de châssis.
